# EUROPEAN PATENT SPECIFICATION

(11) **EP 2 759 462 B1**
(45) Date of publication and mention of the grant of the patent: **08.06.2016**
(21) Application number: 13193680.9
(22) Date of filing: 20.11.2013
(51) Int. Cl.: B62L 3/02, B62K 23/06, B62M 25/04

(54) **Bicycle control device**
Steuerungseinrichtung für ein Fahrrad
Dispositif de commande d'une bicyclette

(30) Priority: 29.11.2012 JP 2012007230 U
(43) Date of publication of application: 30.07.2014
(73) Proprietor: SHIMANO INC., Osaka 590-8577 (JP)
(72) Inventor: Kariyama, Osamu, Osaka, 590-8577 (JP); Kawakami, Tatsuya, Osaka, 590-8577 (JP); Nago, Daisuke, Osaka, 590-8577 (JP); Matsushita, Tatsuya, Osaka, 590-8577 (JP); Nakakura, Masahiro, Osaka, 590-8577 (JP)
(74) Representative: Grosse, Felix Christopher

(56) References cited:
- EP-A2- 1 650 121
- EP-A2- 1 854 713
- GB-A- 2 154 292
- US-A1- 2002 139 637

## Description

The present invention relates to a control device, and particularly to a bicycle control device which can be mounted on the handlebar of a bicycle and which can control a braking device and a shifting device.

Bicycle control devices which can be mounted on the handlebar of a bicycle and which can control a braking device and a shifting device are conventionally known, e. g. from the Japanese Patent Publication No. 3769237. A conventional bicycle control device comprises a support member capable of being attached to a handlebar in the form of a bar handle, a shifting operation mechanism connected to the support member, and a control lever for operating braking and shifting, the control lever pivotably attached to the support member. The conventional bicycle control device, is connected to the shifting device by a shift control cable, and is connected to the braking device by a hydraulic oil pressure tube. In a bicycle control device having such a configuration, the braking operation of the braking device and the winding and winding release operations of the shifting device can be performed by the control lever. The braking device and shifting operation can thereby be performed by one control lever. Document US 2002/0139637 A1 discloses a bicycle control device according to the preamble of claim 1 which can be mounted on a bar handle of a bicycle and which can control a braking device and a shifting device.

### DISCLOSURE OF THE INVENTION

In a conventional bicycle control device, because the support member is configured so as to be mounted on a bar handle, it is not possible to configure a bicycle control device that can be mounted on a drop handlebar used in road races and the like, and that has a gripping portion that can be gripped by a rider when mounted to such a drop handlebar.

An object of the present invention is to provide a bicycle control device that can be mounted on a drop handlebar used in road races and the like, that has a gripping portion that can be gripped by a rider, and that can perform a braking operation by hydraulic oil pressure and a shifting operation by cables, which is capable of controlling a braking device and a shifting device, wherein its operation is improved when being attached to a drop down handlebar.

A bicycle control device according to claim 1 is a bicycle control device capable of being mounted on the handlebar of a bicycle and capable of controlling a braking device and a shifting device. The bicycle control device comprises a housing member, a hydraulic oil pressure generator, a control lever member, and a shifting operation mechanism. The housing member has an attachment portion capable of being attached to the handlebar, and a gripping portion capable of being gripped. The hydraulic oil pressure generator has a cylinder provided inside the gripping portion of the housing member, and a piston capable of moving within the cylinder; and the hydraulic oil pressure generator is for controlling the braking device. The control lever member is connected to the housing member so as to be pivotable about a first axis, and the control lever member has a first operation lever for operating the piston. The shifting operation mechanism is mounted to the control lever member, and is a mechanism for controlling a control cable capable of connecting with the shifting device. The gripping portion has a gripping part main body, and a cover member made of an elastic body covering the outside surface of the gripping part main body.

In this bicycle control device, the shifting device is operated via the control cable by gripping portion of the housing member and operating the control lever member to activate the shifting operation mechanism. The braking device is also controlled by the hydraulic oil pressure generated from the piston of the hydraulic oil pressure generator being moved by the operation of the first operation lever of the control lever member. Because the gripping part is gripped to perform the shifting operation and the braking operation, the braking device can be attached to a drop handlebar. Because the hydraulic oil pressure generator is inside the gripping part of the housing member and the braking device can be controlled by hydraulic oil pressure, a bicycle control device can be provided which can perform a braking operation through hydraulic oil pressure and a shifting operation through a control cable. The cylinder is provided inside the housing member. In this case, because the cylinder is provided inside the housing member which has comparatively excessive space, the shape of the housing member does not deform readily in a housing member of a bicycle control device braked by a normal control cable, despite the cylinder being provided.

A bicycle control device according to a second aspect is the bicycle control device according to the first aspect, wherein the control lever member has a support member connected to the housing member so as to be pivotable about the first axis. In this case, the shifting operation mechanism can be provided to the support member of the control lever member.

A bicycle control device according to a third aspect is the bicycle control device according to the second aspect, wherein the shifting operation mechanism is supported on the support member, and the shifting operation mechanism has a cable winding member for winding the control cable about a second axis different from the first axis. In this case, the shifting operation mechanism can be provided to the support member of the control lever member, and the control cable can be wound around the second axis.

A bicycle control device according to a fourth aspect is the bicycle control device according to the third aspect, wherein the first operation lever of the control lever member is connected to the support member so as to be pivotable about the second axis, and the first operation lever can operate the cable winding member. In this case, both the braking operation and the shifting operation can be performed by the first operation lever of the control lever member.

A bicycle control device according to a fifth aspect is the bicycle control device according to any of the second through fourth aspects, wherein the control lever member is connected to the support member so as to be pivotable about a second axis different from the first axis, and the control lever member has a second operation lever for operating the shifting operation mechanism. In this case, the shifting operation mechanism can be activated to perform the shifting operation by pivoting the second operation lever about the second axis, which is different from the braking operation.

A bicycle control device according to a sixth aspect is the bicycle control device according to any of the second through fourth aspects, wherein the control lever member is connected to the support member so as to be pivotable about a third axis different from the first axis and the second axis, and the control lever member has a second operation lever for operating the shifting operation mechanism. In this case, the shifting operation mechanism can be activated to perform the shifting operation by pivoting the second operation lever about the third axis which is different from the first axis and the second axis, and the shifting operation mechanism can be made more compact.

A bicycle control device according to a seventh aspect is the bicycle control device according to any of the second through fourth aspects, wherein the control lever member is connected to the first operation lever so as to be pivotable about a third axis different from the first axis and the second axis, and the control lever member has a second operation lever for operating the shifting operation mechanism. In this case, the shifting operation mechanism can be activated to perform the shifting operation by pivoting the second operation lever about the third axis which is different from the first axis and the second axis, and the shifting operation mechanism and the control lever member can be made more compact by connecting the second operation lever to the first operation lever.

A bicycle control device according to an eighth aspect is the bicycle control device according to any of the fifth through seventh aspects, wherein the second operation lever of the control lever member includes a winding operation lever for performing a winding control operation of the control cable, and a release operation lever for performing a winding release operation of the control cable. In this case, the shifting operation in both shifting directions (the up-shifting direction and the downshifting direction) of the shifting device can be performed by the two operation levers of the second operation lever of the control lever member, i.e. the winding operation lever and the release operation lever.

A bicycle control device according to a ninth aspect is the bicycle control device according to any of the fifth through seventh aspects, wherein the first operation lever is a winding operation lever for performing a winding control operation of the control cable, and the second operation lever is a release operation lever for performing a winding release control operation of the control cable. In this case, the winding and winding release operations (cable unreeling operation) of the control cable can be performed by the two operation levers.

A bicycle control device according to a tenth aspect is the bicycle control device according to any of the third through ninth aspects, wherein the first axis and the second axis are not parallel. In this case, because the first axis and the second axis are disposed in different directions, the braking operation and the shifting operation can be distinguished, and the braking operation and the shifting operation can be reliably performed.

A bicycle control device according to an eleventh aspect is the bicycle control device according to any of the third through tenth aspects, the first axis being substantially perpendicular to the traveling direction of the bicycle when the bicycle control device is mounted on a bicycle. The second axis is substantially parallel to the traveling direction of the bicycle. In this case, the braking operation of the first operation lever can be performed in the same manner as the usual brake lever operation.

A bicycle control device according to a twelfth aspect is the bicycle control device according to any of the first through eleventh aspects, wherein the hydraulic oil pressure generator generates hydraulic oil pressure by operating the piston in a direction of inserting into the cylinder. In this case, because hydraulic oil pressure is generated by the piston being pushed and inserted into the cylinder by the operation of the first operation lever, oil does not flow into the connection between the first operation lever and the cylinder. Therefore, the amount of packing for the seal can be reduced.

A bicycle control device according to a thirteenth aspect is the bicycle control device according to any of the first through twelfth aspects, wherein the hydraulic oil pressure generator generates hydraulic oil pressure by operating the piston in a direction of pulling out of the cylinder. In this case, because hydraulic oil pressure is generated by the piston being pulled and withdrawn out of the cylinder by the operation of the first operation lever, only tension acts on the connecting portion between the piston and the first operation lever. Therefore, buckling no longer occurs in the rod, the connecting portion can be made less rigid, and the weight of the connecting portion can be reduced.

A bicycle control device according to a fourteenth aspect is the bicycle control device according to the first through thirteenth aspects, wherein the hydraulic oil pressure generator has a rod connected to the piston and operated by the first operation lever. In this case, the movement of the piston is smooth because the cylinder and the first operation lever are connected by the rigid rod.

A bicycle control device according to a fifteenth aspect is the bicycle control device according to any of the first through fourteenth aspects, wherein the hydraulic oil pressure generator further has a reservoir connected to the cylinder and capable of storing oil for generating hydraulic oil pressure. In this case, even when a friction member of the braking device becomes worn and a greater amount of oil is needed, the necessary amount of oil can be poured in by the reservoir, and the hydraulic oil pressure does not change even if the temperature of the oil changes. It is therefore possible to prevent changes in braking characteristics caused by wear in the friction members or changes in oil temperature.

A bicycle control device according to a sixteenth aspect is the bicycle control device according to any of the first through fifteenth aspects, wherein the hydraulic oil pressure generator further has a return spring for urging the piston in the direction opposite the hydraulic oil pressure generating operation performed by the first operation lever, the return spring being provided inside the cylinder. In this case, when the hydraulic oil pressure generating operation by the first operation lever is ended, the piston can be returned to the position prior to the braking operation.

A bicycle control device according to an seventeenth aspect is the bicycle control device according to any of the first through seventeenth aspects, wherein the cylinder is provided integrally to the housing member. In this case, the cylinder is provided integrally to the housing member, and the costs of manufacturing and attaching the cylinder can be reduced.

According to the present invention, because the shifting operation and the braking operation can be performed by gripping the gripping part, the bicycle control device can be attached to the drop handlebar. It is also possible to provide a bicycle control device in which the braking operation can be performed by hydraulic oil pressure and the shifting operation can be performed by a control cable, because the hydraulic oil pressure generator is inside the gripping part of the housing member and the braking device can be controlled by hydraulic oil pressure.

Furthermore, it is possible to provide a bicycle control device in which the hydraulic oil pressure generator is readily configured inside the housing member, and particularly inside the gripping part, by providing the shifting operation mechanism to the control lever member.

### BRIEF DESCRIPTION OF THE DRAWINGS

- FIG. 1: is a drawing showing the bicycle control device and the bicycle braking device according to the first embodiment of the present invention;
- FIG. 2: is a partial cross-sectional side view of the bicycle control device according to the first embodiment of the present invention;
- FIG. 3: is a drawing equivalent to FIG. 2 when the bicycle control device according to the first embodiment is operated to brake;
- FIG. 4: is a cross-sectional view of the shifting operation mechanism of the bicycle control device;
- FIG. 5: is a rear view with part of the shifting operation mechanism of the bicycle control device removed;
- FIG. 6: is a drawing equivalent to FIG. 2 of the bicycle control device according to the second embodiment of the present invention;
- FIG. 7: is a drawing equivalent to FIG. 3 of the bicycle control device according to the second embodiment of the present invention;
- FIG. 8: is a drawing equivalent to FIG. 2 of the bicycle control device according to another embodiment of the present invention
- FIG. 9: is a drawing equivalent to FIG. 2 of the bicycle control device according to yet another embodiment of the present invention;
- FIG. 10: is a drawing equivalent to FIG. 2 of the bicycle control device according to yet another embodiment of the present invention;
- FIG. 11: is a drawing equivalent to FIG. 2 of the bicycle control device according to yet another embodiment of the present invention; and
- FIG. 12: is a drawing equivalent to FIG. 2 of the bicycle control device according to even yet another embodiment of the present invention.

### PREFERRED EMBODIMENTS OF THE INVENTION

Selected embodiments of the present invention are described herein while referring to the drawings. It is clear from the present disclosure that the embodiments are thorough with the relevant art, but the descriptions of the multiple embodiments of the present invention are intended only for the drawings, and the present invention is not limited by the definitions in the accompanying claims or similar claims.

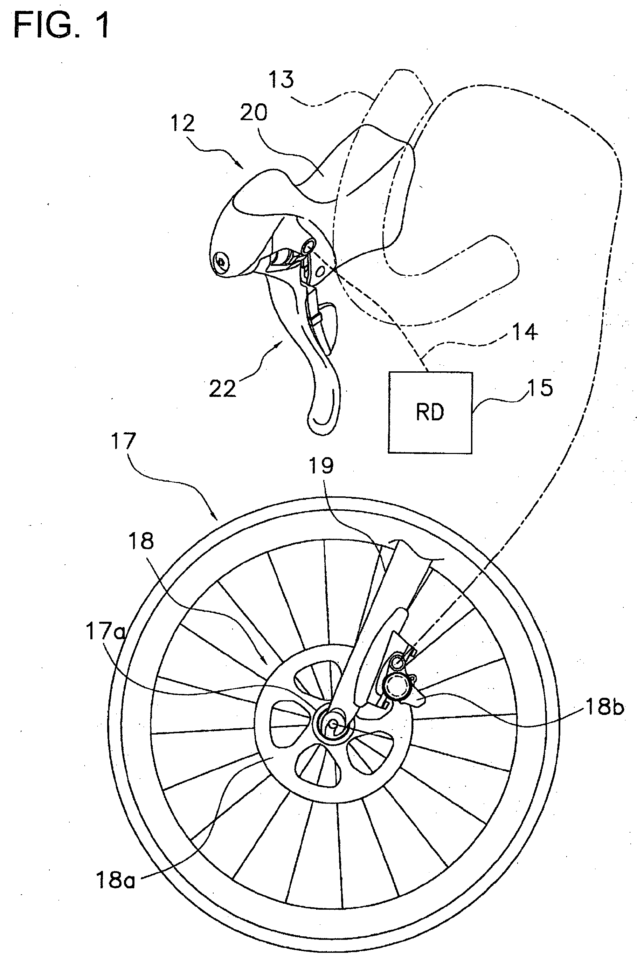

FIG. 1 shows a state in which a pair of bicycle control devices 12 (only the control device on the right side of the drop handlebar 13 is shown in FIG. 1) according to the first embodiment of the present invention is attached to a drop handlebar 13 of a bicycle. In the following description, the bicycle control device is referred to simply as the control device. The right bicycle control device 12 is connected to a rear derailleur 15 via a shift cable 14 as a control cable. The right bicycle control device 12 is connected to a braking device 18 for braking a front wheel 17 via a hydraulic oil pressure tube 16. The braking device 18 is a hydraulic oil pressure disc brake device which is actuated by hydraulic oil pressure. The braking device 18 has a brake disc 18a attached in an integrally rotatable manner to a hub 17a of the front wheel 17, and a caliper 18b which is fixed to a front fork 19 of the bicycle and which brakes by clamping the brake disc 18a. The left control device (not shown) is connected to a front derailleur via a shift cable (both not shown), and is also connected to a braking device of a rear wheel (not shown), for example, via a hydraulic oil pressure tube. The front derailleur and the rear derailleur 15 are an example of a shifting device. The right control device 12 and the left control device are perfectly symmetrical to each other, and except for having different numbers of shift positions, the control devices have substantially identical structures and actions. Therefore, on the right control device 12 is described in detail and illustrated herein.

As used in the description of the control device 12, terms below indicating directions, such as "forward, rearward, up, down, perpendicular, horizontal, bottom, and side," represent directions of the bicycle to which the control device 12 of the present invention is mounted. Therefore, these terms for describing the present invention must be interpreted as referencing the bicycle to which the control device 12 of the present invention is mounted. The terms "left and right" are used to indicate the "right" when referencing from the right side when the bicycle to which the control device 12 is mounted is viewed from the rear, and the "left" when referencing from the left side.

Because a majority of the components of the bicycle are conventionally known in the relevant art, details relating to the components of the bicycle are not described or shown herein, except for components pertinent to the control device 12 of the present invention. Furthermore, various components of a conventional bicycle not shown or described herein, including braking devices, shifting devices, sprockets, and the like, can be used together with the control device 12 according to the present invention.

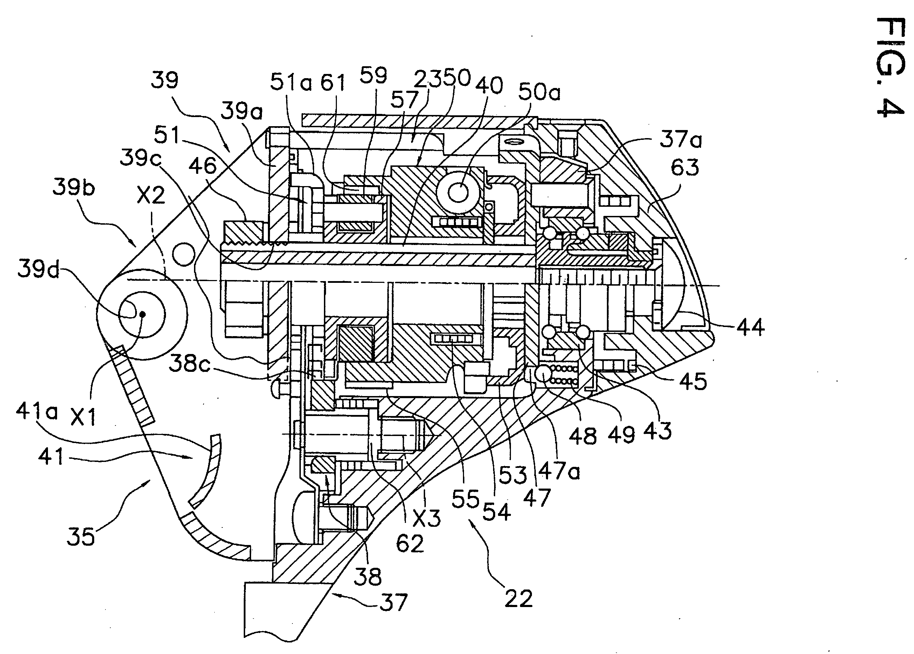

As shown in FIGS. 1,2, and 4, the control device 12 includes a housing member 20, a hydraulic oil pressure generator 21, a control lever member 22, and a shifting operation mechanism 23 (see FIG. 4). The housing member 20 has an attachment portion 20a capable of being attached to a curved part 13a formed in the end of the drop handlebar 13 of the bicycle, and a gripping portion 20b provided with the attachment portion 20a and capable of being gripped by a rider. The attachment portion 20a is conventionally-known band-shaped member, and the control device 12 can be fixed to the drop handlebar 13 by fastening the attachment portion 20a by a screw. The gripping portion 20b has a gripping part main body 24, and a cover member 25 made of an elastic body covering the outside surface of the gripping part main body 24. The top surface of the gripping part main body 24 is formed as curving concavely downward in order to make the gripping portion 20b easily gripped by hand. The gripping part main body 24 has an accommodating space 24a for internally accommodating the hydraulic oil pressure generator 21 in a detachable manner, and a pair of left and right first brackets 24b to which a lever spindle 26 is mounted for connecting the control lever member 22 to the housing member 20. The lever spindle 26 is disposed left-to-right, substantially perpendicular to the direction in which the bicycle travels, and the core thereof is a first axis X1. The accommodating space 24a is formed is formed as being concaved into a cylindrical shape from the rear of the gripping part main body 24 in the first embodiment. The rear surface of the gripping part main body 24 is curved so as to conform to the curved part 13a of the drop handlebar 13.

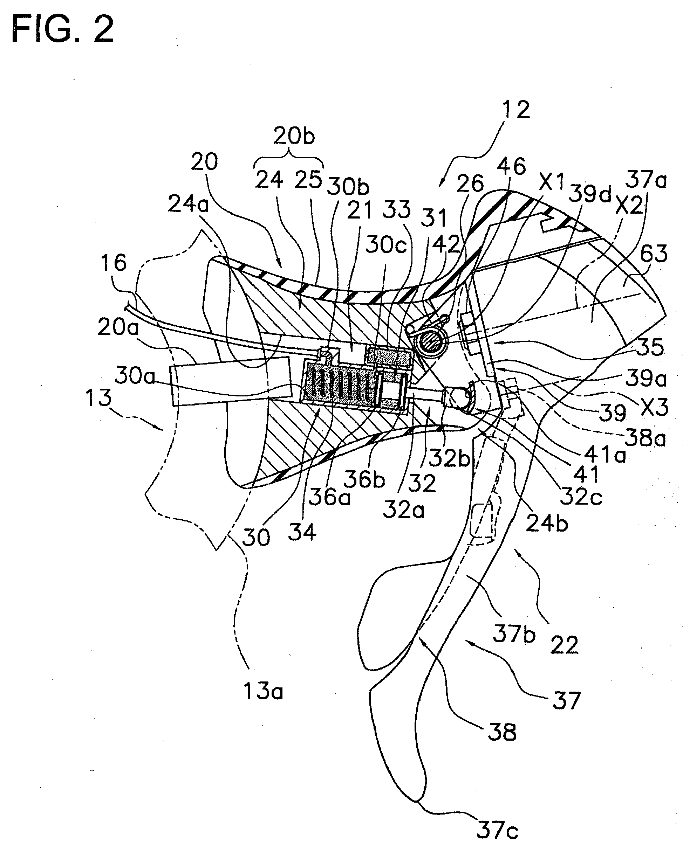

The hydraulic oil pressure generator 21 is provided in order to impart hydraulic oil pressure to the braking device 18 and brake the braking device 18, as shown in FIG. 2. The hydraulic oil pressure generator 21 has a cylinder 30 accommodated in the accommodating space 24a, a piston 31 which moves linearly within the cylinder 30, a rod 32 connecting to the piston 31, a reservoir 33 connected to the cylinder 30, and a first return spring 34. The hydraulic oil pressure generator 21 of the first embodiment generates hydraulic oil pressure by operating in a direction of inserting the piston 31 through the cylinder 30. The cylinder 30 has a movement space 30a through which the piston 31 moves, a first port 30b for supplying pressure oil to the braking device 18, and a second port 30c for connecting with the reservoir 33. The first port 30b is disposed in the rear of the cylinder 30. The hydraulic oil pressure tube 16 connected with the braking device 18 is mounted in the first port 30b.

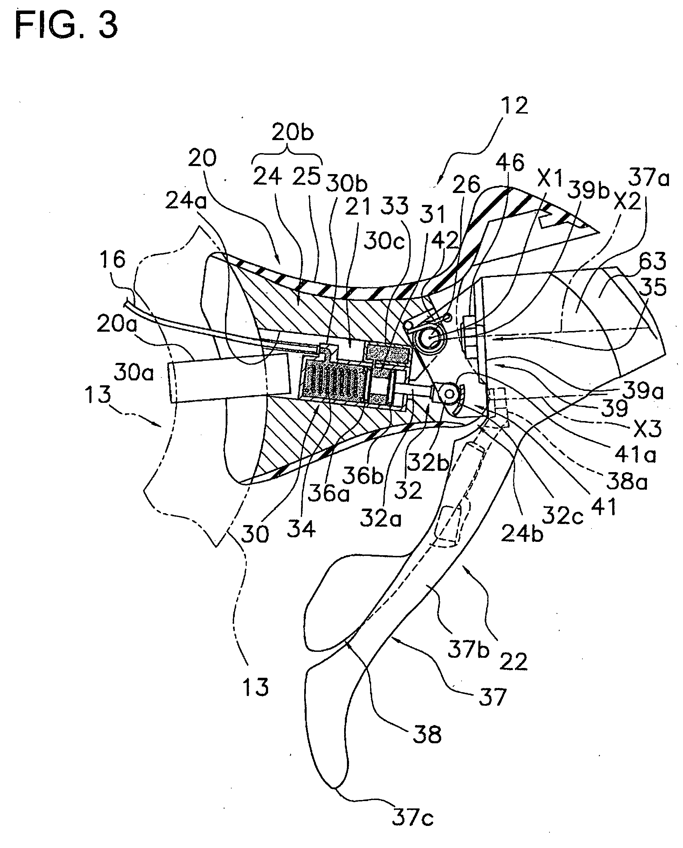

A first seal member 36a and a second seal member 36b in the form of O rings, for example, are mounted to both ends of the external peripheral surface of the piston 31. The first seal member 36a and the second seal member 36b are provided in order to seal the gaps between the internal peripheral surface of the movement space 30a of the cylinder 30 and the external peripheral surface of the piston 31. A single seal member may also be used. The piston 31 moves through the movement space 30a between a first position of being disposed at the tip of the cylinder 30 shown in FIG. 2, and a second position of being pulled farther in than the first position and shown in FIG. 3, in accordance with the braking operation of the control lever member 22. The second port 30c is disposed nearer the first port 30b than the first seal member 36a when the piston 31 is disposed in the first position. The second port 30c is also disposed between the first seal member 36a and the second seal member 36b when the piston 31 is disposed in the second position. The first port 30b is disposed farther to the rear than the first seal member 36a when the piston 31 is disposed in the second position.

The rod 32 is pulled into the cylinder 30 in accordance with the control lever member 22 being operated in the braking direction. The rod 32 has a rod main body 32a provided integrally to the piston 31, a double clevis 32b fixed to the tip of the rod main body, and a roller 32c rotatably mounted to the clevis 32b. The roller 32c is pushed by a pushing member 41, described hereinafter, provided to the control lever member 22.

The reservoir 33 is capable of storing oil for generating hydraulic oil pressure. When a friction member of the braking device becomes worn and a greater amount of oil is needed, the necessary amount of oil can be poured in from the reservoir 33, which is provided in order to prevent fluctuations in the pressure imparted to the braking device 18 by expansion and contraction caused by changes in the oil temperature. In this embodiment, the reservoir 33 is fixed to the cylinder 30 and Interconnected with the cylinder 30 by the first port 30b. However, the reservoir 33 may be formed integrally with the cylinder 30.

The first return spring 34 is a coil spring, for example, and is an example of a return spring. The first return spring 34 is provided inside the cylinder 30, in a compressed state in contact with the surface of the piston 31 on the side opposite side where the rod 32 is fixed. The first return spring 34 urges the piston 31 in a direction (to the right in FIG. 2) opposite that of the hydraulic oil pressure generating operation of the control lever member 22. Specifically, the piston 31 is urged toward the first position.

The control lever member 22 and the shifting operation mechanism 23 are essentially activated by the same method as described in U.S. Patent Publication No. 6,212,078 (the right holder of which being the applicant of the present invention). Therefore, descriptions relating to the detailed structures and actions of the control lever member 22 and the shifting operation mechanism 23 are omitted herein.

The control lever member 22 has a support member 35, a first operation lever 37, and a second operation lever 38, as shown in FIGS. 2 through 4. The support member 35 is connected to be pivotable about the first axis X1 to the lever spindle 26 disposed in the housing member 20. The support member 35 pivots about the first axis X1 from an initial position shown in FIG. 2 to a swung position shown in FIG. 3. The support member 35 is urged to an initial position by a second return spring 42 in the form of a torsion coil spring wound around the periphery of the lever spindle 26. One end of the second return spring 42 is engaged with the first brackets 24b of the gripping part main body 24, and the other end is engaged with a second bracket 39, described hereinafter, of the support member 35.

The support member 35 has the second bracket 39 which has a fixing plate 39a and mounting plates 39b bent from both ends of the fixing plate 39a, a first support spindle 40 fixed to the fixing plate 39a, and the pushing member 41 which is provided between the pair of mounting plates 39b. A first through-hole 39c through which the first support spindle 40 passes is formed in the fixing plate 39a. Formed in the pair of mounting plates 39b are second through-holes 39d through which the lever spindle 26 passes, the second through-holes being pivotably supported on the lever spindle 26. The first support spindle 40 is disposed along a direction not parallel with the first axis X1 (a crisscrossing direction, for example), i.e. a second axis X2 substantially parallel to the direction in which the bicycle travels. The first support spindle 40 is fixed to the fixing plate 39a of the support member 35 of the control lever member 22 by a nut 46 threaded on the end of the first support spindle 40 passed through the first through-hole 39c. Specifically, the end of the first support spindle 40 extends through the first through-hole 39c of the fixing plate 39a of the second bracket 39 so that the shifting operation mechanism 23 is fixed in place.

The second through-holes 39d are disposed higher than the pushing member 41. The pushing member 41 has a curved surface 41a comprising a plurality of connected arcs in a portion in contact with the roller 32c provided to the end of the rod 32, in order to enable the rod 32 to be pushed in the axial direction regardless of the swung position of the control lever member 22.

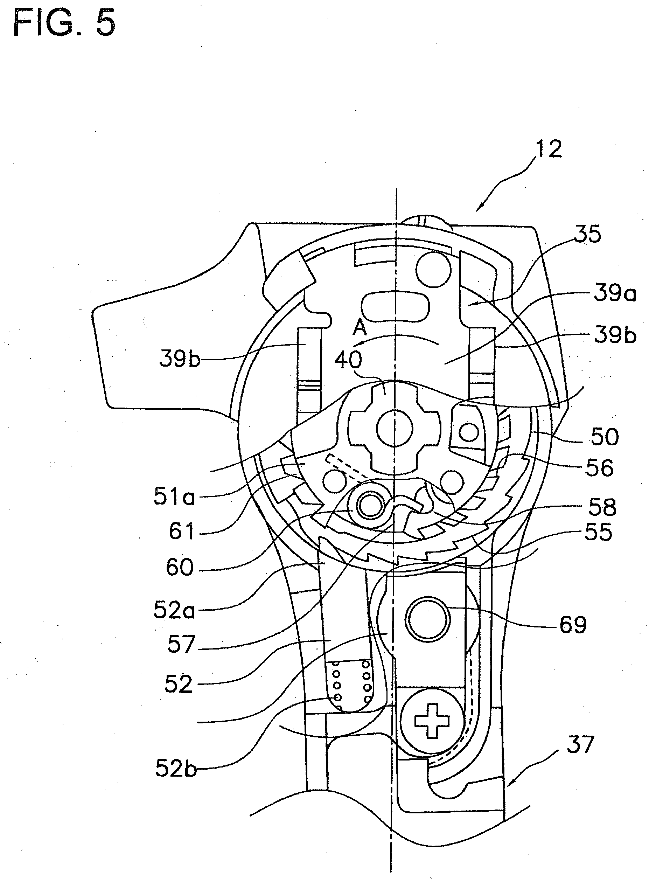

As shown in FIGS. 4 and 5, the first operation lever 37 is connected together with the support member 35 to the lever spindle 26 so as to be pivotable about the first axis X1, and is also connected to the first support spindle 40 so as to pivotable about the second axis X2, as well as being provided for the previously described braking operation and a shifting operation of the rear derailleur 15 in one direction. The first operation lever 37 is controllably connected to the shifting operation mechanism 23 so as to operate a cable winding member 50 of the shifting operation mechanism 23 by the operation of pivoting about the second axis X2, and to up-shift (or down-shift) the rear derailleur 15 by winding, i.e. pulling the shift cable 14. The braking device 18 is braked by the generation of hydraulic oil pressure by the pivoting operation about the first axis X1.

In the present example, the second operation lever 38 is connected to the second support spindle 62 so as to be pivotable about the third axis X3, which is different from the first and second axes and substantially parallel with the second axis, the second support spindle being fixed to the first operation lever 37 along the third axis X3, and the second operation lever is provided for the shifting operation of the rear derailleur 15 in the other direction. The second operation lever 38 is controllably connected to the shifting operation mechanism 23 so as to down-shift (or up-shift) the rear derailleur 15 by unwinding, i.e. releasing the shift cable 14.

As shown in the other examples, the second operation lever 38 may be connected to the support member 35 so as to be pivotable about the second axis X2. The second operation lever 38 may also be connected to the second support spindle 62 so as to be pivotable about the third axis X3, which is different from the first and second axes and substantially parallel with the second axis, the second support spindle being fixed to the support member 35 along the third axis X3.

In the present example, the shifting operation mechanism 23 is essentially actuated either by turning the first operation lever 37 about the second axis X2 of the first support spindle 40, or by turning the second operation lever 38 about the third axis X3 of the third support spindle 62. The third axis X3 of this embodiment is substantially parallel to the second axis X2.

The first operation lever 37 has a mounting end portion 37a, a shifting operation portion 37b, and a free end portion 37c, as shown in FIG. 2. The mounting end portion 37a of the first operation lever 37 is pivotably connected to the first support spindle 40 so as to move about the second axis X2 between an initial position and a shifting position. The shifting operation portion 37b extends downward from the tip portion of the housing member 20. The first operation lever 37 is an example of a winding lever.

The second operation lever 38 is turnably attached to the first operation lever 37 between the mounting end portion 37a of the first operation lever 37 and the shifting operation portion 37b of the first operation lever 37. As previously described, the second operation lever 38 is controllably connected to the shifting operation mechanism 23 so as to release the shift cable 14. The second operation lever 38 is an example of a release lever.

The shifting operation mechanism 23 is rotatably connected to the housing member 20 by the support member 35. The shifting operation mechanism 23 has at least the cable winding member 50, and the winding rotation axis of the cable winding member 50 is defined as the second axis X2.

The mounting end portion 37a of the first operation lever 37 is mounted to the first support spindle 40, which is rotatably supported via a bearing assembly 43 (see FIG. 4). The bearing assembly 43 and the mounting end portion 37a of the first operation lever 37 are detachably mounted to the first support spindle 40 by a fixing screw 44. The first operation lever 37 turns about the second axis X2 which extends in a direction crisscrossing the first axis X1. Thus, the first operation lever 37 is controllably connected to the shifting operation mechanism 23 so as to turn about the second axis X2. Specifically, for the purpose of shifting, the first operation lever 37 is pivotable in a direction perpendicular to the direction in which the first operation lever 37 moves for braking.

A third return spring 45 is attached on the fixing screw 44. One end of the third return spring 45 is engaged with the mounting end portion 37a of the first operation lever 37, and the other end of the third return spring 45 is engaged with an outer cap unit 63 fixed to the first support spindle 40 so that rotation is halted by the fixing screw 44. The third return spring 45 exerts urging force on the first operation lever 37 in a first rotational direction shown by the arrow A in FIG. 5, so as to urge the first operation lever 37 from the shifting position to a reference stationary position.

As shown in FIG. 4, a fixing plate 47 having a groove 47a is attached adjacent to the tip of the housing member 20 so as to be incapable of relative rotation. The mounting end portion 37a comprises a ball 48 disposed adjacent to the vicinity thereof and engaged in the groove 47a, and a lever positioning spring 49 for urging the ball 48 toward the groove 47a. By this structure, the first operation lever 37 is held in a neutral position in contraposition to the most distal end of the curved portion of the drop handlebar 13, and the first operation lever 37 is prevented from pivoting along with the second operation lever 38 when the second operation lever 38 is operated.

Referring to FIGS. 4 and 5, the shifting operation mechanism 23 further comprises the cable winding member 50, a position holding mechanism 51 formed by the second operation lever 38 and a release plate 51a, a transmission member 52 connected to the first operation lever 37, and a shift position sensor 53 disposed between the mounting end portion 37a and the cable winding member 50. The shift position sensor 53 is used in order to detect the positions of currently engaged gears. As shown in the drawings, the shift position sensor 53 is a potentiometer.

The cable winding member 50 of the shifting operation mechanism 23 comprises a shift cable mounting part 50a to which a cable (not shown) fixed to the end of an inner cable of the shift cable 14 is mounted, the cable winding member has a substantially cylindrical shape, and the cable winding member rotates about the second axis X2, which is the winding rotational axis of the inner cable, and winds the inner cable.

The cable winding member 50 is usually urged in the unwinding direction by a fourth return spring 54. Specifically, the fourth return spring 54 is configured and disposed so as to exert urging force in a first rotational direction, so that the cable winding member 50 is rotated in the unwinding direction. The cable winding member 50 further comprises a plurality of drive teeth 55 disposed on the external peripheral surface, and a plurality of engaging teeth 56 disposed on the internal peripheral wall.

The transmission member 52 comprises an engaging protuberance 52a at the tip. The transmission member 52 is urged by a spring 52b disposed in a groove of the.first operation lever 37, so as to push against the drive teeth 55 of the cable winding member 50. Therefore, when the first operation lever 37 is pivoted about the second axis X2, the cable winding member 50 rotates against the spring force of the fourth return spring 54 as a result.

The first support spindle 40 nonrotatably supports a pawl support main body 57, which pivotably supports a return pawl 58 and a positioning pawl 59. A spring 60 is provided so as to urge the return pawl 58, and another spring (not shown) is provided so as to urge the positioning pawl 59 in a direction away from control grooves 61 formed In the internal peripheral surface of the cable winding member 50.

The second operation lever 38 is pivotably connected to the mounting end portion 37a by the second support spindle 62. The second operation lever 38 comprises a control protuberance 38c protruding from the near end thereof in a direction opposite of a mounting end portion 38a. The control protuberance 38c engages with a control plate 51a supported on the first support spindle 40. The movement of the second operation lever 38 causes the control plate 51a to be rotated and the cable winding member 50 to thereby be released, and as a result, the cable winding member 50 is rotated in the unwinding direction by the fourth return spring 54.

The control plate 51a comprises an engaging protuberance for engaging with both the return pawl 58 and the positioning pawl 59, so that when the second operation lever 38 is swung laterally, the return pawl 58 is moved in a direction out of being engaged and the positioning pawl 59 is moved to an engaged position. The control plate 51a further comprises a first cam surface in contact with the engaging protuberance 52a, and a second cam surface which engages with the control protuberance 38c. The control plate 51 a, the return pawl 58, and the positioning pawl 59 activate by the same method as the corresponding members of the fourth embodiment disclosed in U.S. Patent Publication No. 5,241,878 (the right holder of which is the same applicant of the present invention). Through this configuration, shifting is achieved by the pivoting motion in a direction perpendicular to the direction of the pivoting motion of the first operation lever 37.

The second operation lever 38 is disposed in a groove located in the rear surface of the mounting end portion 37a. To make operation easier, the mounting end portion 38a of the second operation lever 38 is disposed near the first operation lever 37 and made to protrude toward the drop handlebar 13 relative to the mounting end portion 37a. The second operation lever 38 has an initial position where one side surface of the second operation lever 38 is in contact with a side surface of the groove of the mounting end portion 37a.

With the first operation lever 37 of the illustrated embodiment, the first operation lever 37 can be pivoted to the braking position while the curved portion of the drop handlebar 13 or the housing member 20 is gripped by hand. The first operation lever 37 turns about the first axis X1. The piston 31 of the hydraulic oil pressure generator 21 is pushed to generate hydraulic oil pressure in the cylinder 30 by this pivoting of the first operation lever 37, the braking device is activated by the hydraulic oil pressure, and the bicycle is braked. The first operation lever 37 is pivotable about the second axis X2 and pivoting laterally from the stationary position in order to down-shift the speed step to a lower speed, for example, and when the lever is released, the lever is returned to the stationary position by the spring force of the fourth return spring 54. The second operation lever 38 is pivotable laterally from the stationary position in order to up-shift the speed step to a higher speed, for example, and when the lever is released, the lever is returned to the stationary position by the spring force of the spring urging the return pawl 58 and the spring urging the positioning pawl 59.

When the first operation lever 37 is swung laterally while the transmission member 52 is engaged with one cable of the drive teeth 55, the transmission member 52 drives the cable winding member 50 and the return pawl 58 separates from the engaging teeth 56. As a result, the inner cable of the shift cable 14 is pulled and the selected up-shift speed is achieved. When the first operation lever 37 is released, the first operation lever 37is returned to the initial position by the spring force of the third return spring 45.

When the second operation lever 38 is pivoted about the third axis X3, which is different from the first and second axes and substantially parallel with the second axis X2, and the second operation lever is swung laterally from the stationary position, the control plate 51 a is driven via the control protuberance 38c. Next, the engaging protuberance of the control plate 51a pushes the positioning pawl 59 in the direction of the control grooves 61, and the tip of the positioning pawl 59 fits into one of the control grooves 61. The engaging protuberance of the control plate 51a also moves in a direction of removing the return pawl 58 from the engagement with an engaging tooth 56. As a result, the cable winding member 50 is returned across the gap between the positioning pawl 59 and the control groove 61, i.e. a distance corresponding to one pitch of the engaging teeth 56 or less. When the second operation lever 38 is released so as to return, the control plate 51 a rotates, the positioning pawl 59 is removed from the engagement with the control groove 61, and the return pawl 58 moves until it engages with the adjacent engaging tooth 56.

When the first operation lever 37 is pivoted in order to shift speeds, the second operation lever 38 pivots together with the first operation lever 37 instead of moving relative to the first operation lever 37. The first operation lever 37 can thereby pivot without being hindered by the second operation lever 38.

The first operation lever 37 of the illustrated embodiment previously described can be swung in the pivoting direction of the first operation lever 37, i.e. in a direction perpendicular to the axial direction of a braking pivoting axis P. Alternatively, the first operation lever 37 may pivot in a direction inclined relative to the braking pivoting axis P. This objective may be achieved by pivoting the first operation lever 37 in a different direction from which the first operation lever 37 pivots, as long as the pivoting is within a range that does not cause shifting to occur during braking.

While holding the lowest position on the curved portion of the drop handlebar 13, the rider can extend their middle and index fingers of the hand gripping the curve portion and hook these fingers over the first operation lever 37 to pull the first operation lever 37 toward the braking position, i.e. toward the curved portion. This lever operation causes the shifting operation mechanism 23 to pivot about the first axis X1 together with the base member 31. This pivot movement of the first operation lever 37 generates hydraulic oil pressure and applies a brake to the bicycle.

In the following description, only configurations different from the first embodiment are described and denoted by symbols in the drawings, and other configurations similar to those of the first embodiment are not described in configuration or action and are not denoted by symbols in the drawings.

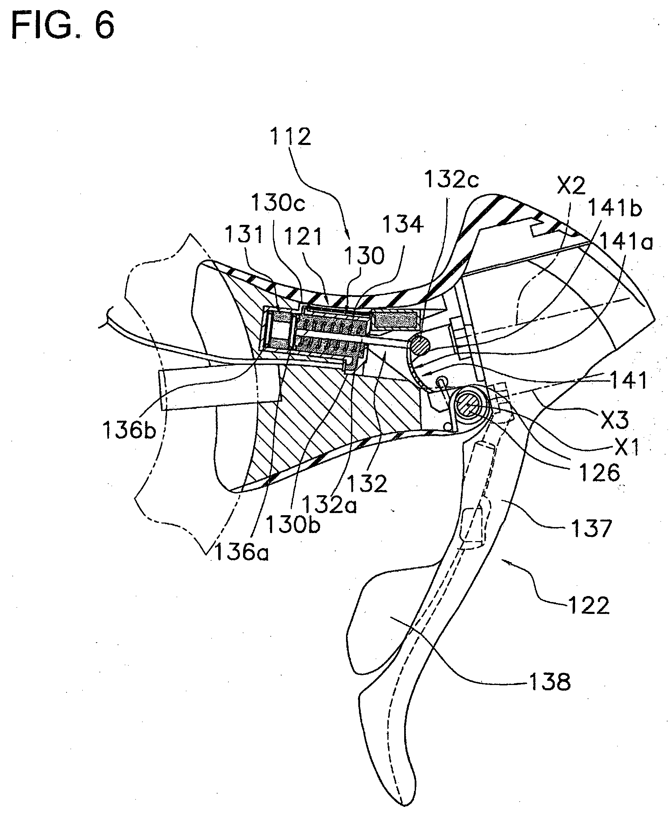

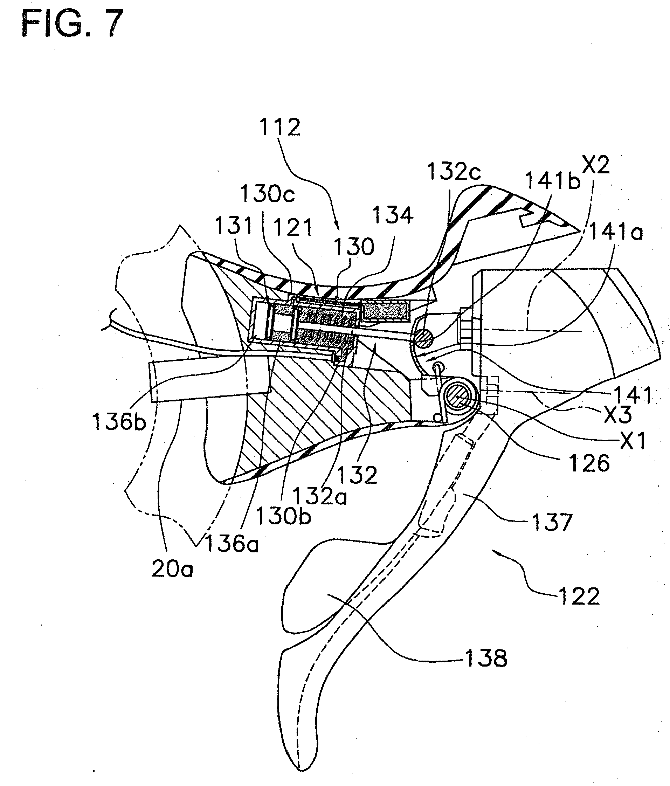

In the first embodiment, the hydraulic oil pressure generator 21 generates hydraulic oil pressure by operating the piston 31 in a direction of inserting into the cylinder 30. A hydraulic oil pressure generator 121 of a control device 112 of the second embodiment generates hydraulic oil pressure by operating a piston 131 in a direction of pulling out of a cylinder 130, as shown in FIGS. 6 and 7. Therefore, a rod 132 is pulled by the braking operation of a first operation lever 137 of a control lever member 122 about a first axis X1. When the piston 131 is in a first position shown in FIG. 6, the piston is disposed near the rear wall of the cylinder 130. When the piston is in a second position shown in FIG. 7, wherein the piston has been pulled by the first operation lever 137, a second port 130c is disposed between a first seal member 136a and a second seal member 136b. A first port 130b of the cylinder 130 is disposed in the front side wall of the cylinder 130.

A second bracket 139 of a support member 135 is provided with a pulling member 141 having a curved surface 141a in which a groove 141b is formed for pulling the rod 132. In the second embodiment, the tip of a rod 132 is provided not with a roller, but with a rod-shaped engaging part 132c which engages with the curved surface 141 a on both sides of the groove 141 b and which is orthogonal to a rod main body 132a.

A lever spindle 126 is disposed at the bottom of first brackets 124b and a second bracket 139, similar to a conventional braking device operated to brake by a braking cable.

In the control device 112 of the second embodiment configured in this manner, when the first operation lever 137 is operated about the first axis X1, the rod 132 is pulled by the pulling member 141. The piston 131 is thereby pulled into the cylinder 130, hydraulic oil pressure is generated, and the braking device 18 brakes the bicycle. Because hydraulic oil pressure is generated by the piston 131 being pulled by the first operation lever 137 and pulled out of the cylinder 130, only pulling force acts on the rod 132, which is the connecting portion between the piston 131 and the first operation lever 137. Therefore, buckling no longer occurs in the rod 132, the connecting portion can be less rigid, and the weight of the rod 132 can be reduced.

An embodiment of the present invention was described above, but the present invention is not limited to the above embodiment, and various alterations can be made within a range that does not deviate from the scope of the invention. Particularly, the plurality of embodiments and modifications written out in the present specification can be combined in any desired manner as needed.

(a) In the first and second embodiments, a disc brake device is given as an example of a braking device that can be activated by hydraulic oil pressure, but the braking device controlled by the present invention is not limited to a disc brake device. The present invention can be applied to a control device for controlling any bicycle braking device that can be activated by hydraulic oil pressure. For example, the present invention can also be applied to a bicycle control device for controlling a braking device such as a caliper brake or a drum brake activated by hydraulic oil pressure.

(b) The first and second embodiments are configured so that a reservoir is provided for storing oil for generating hydraulic oil pressure and changes in the braking characteristics are minimized regardless of temperature changes in the oil, but the present invention can also be applied to a bicycle control device that does not have a reservoir.

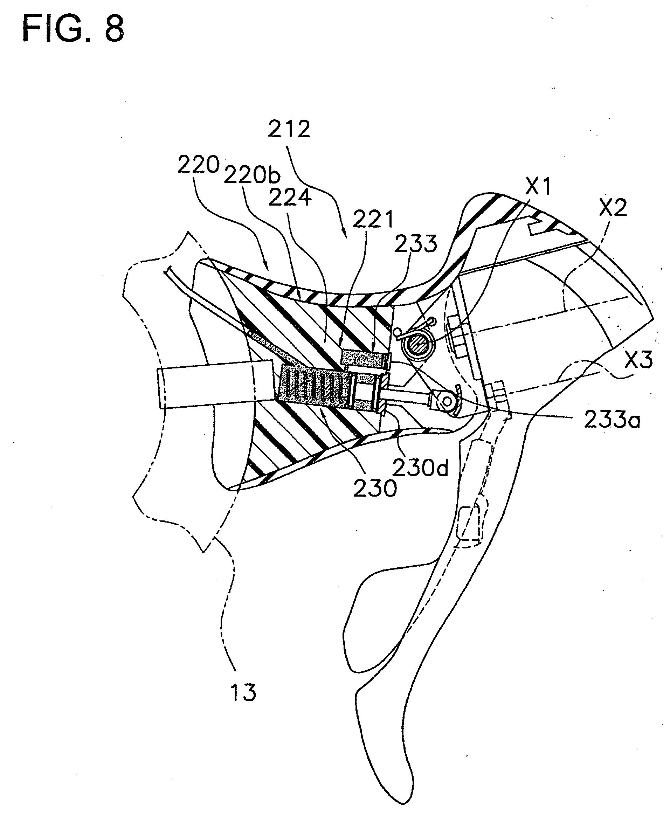

(c) In the first and second embodiments, the cylinder 30 and the reservoir 33 of the hydraulic oil pressure generator 21 are provided as separate members from the support member, but the present invention is not limited as such. For example, in a control device 212 as shown in FIG. 8, a cylinder 230 and a reservoir 233 of a hydraulic oil pressure generator 221 may be integrally formed inside a gripping portion 220b. The cylinder 230 is formed by being concaved into a tube shape from the front part of the gripping part main body 224 of the gripping portion 220b, and is closed by a lid member 230d. The reservoir 233 is formed by being concaved into a tube shape from the front part of the gripping part main body 224 of the gripping portion 220b, and is sealed by a seal cap 233a.

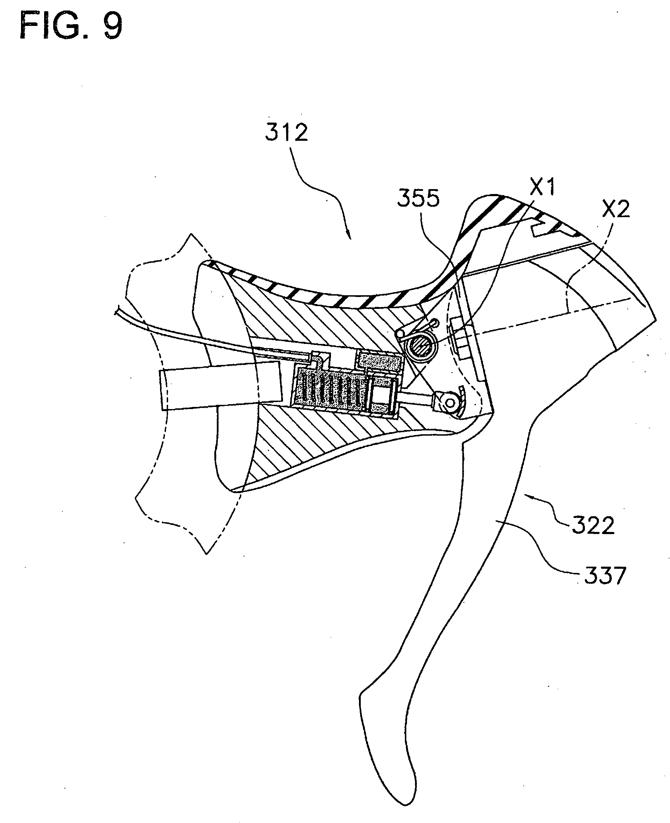

(d) In the first and second embodiments, the control lever member 22 is configured from the support member 35, the first operation lever 37, and the second operation lever 38, but a control lever member 322 of a control device 312 may be configured from a support member 335 and a single first operation lever 337, as shown in FIG. 9. In this case, a winding operation is preferably performed by pivoting the first operation lever 337 in one direction about a second axis X2, and a winding release operation is preferably performed by pivoting the first operation lever 337 in the other direction about the second axis X2.

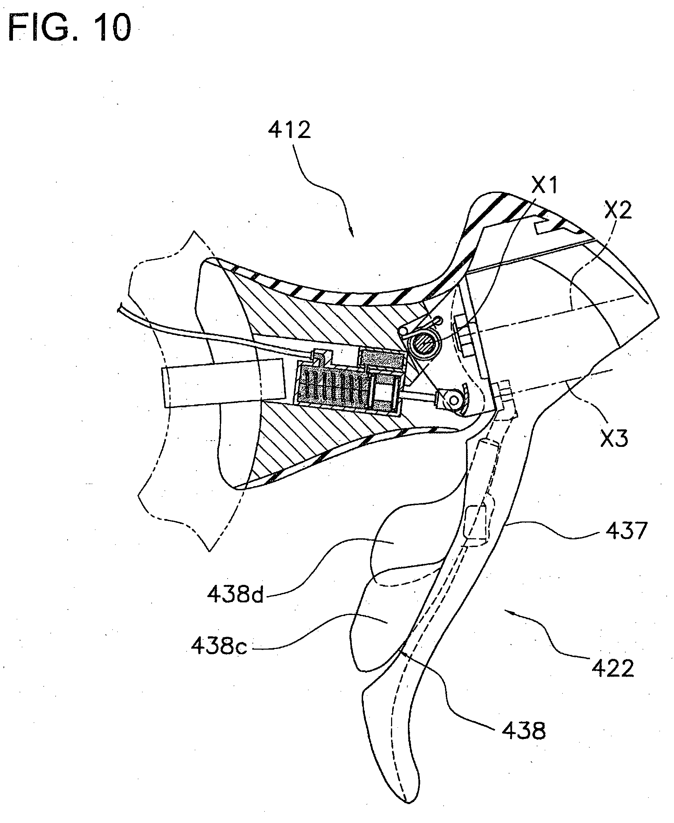

As shown in FIG. 10, a second operation lever 438 of a control lever member 422 of a control device 412 may be configured from two levers: a winding operation lever 438c and a release operation lever 438d. In this case, a first operation lever 437, which does not pivot about the second axis X2 but pivots only about the first axis X1, is used specifically for the braking operation.

(e) In the first and second embodiments, the first return spring 34 and the second return spring 42 are provided respectively to the first operation lever 37 and the hydraulic oil pressure generator 21, but another option is to provide a return spring to only one of these components. When a return spring is provided to the braking device side, a return spring need not be provided to the bicycle control device side.

(f) In the first and second embodiments, the piston 31 (or the piston 131) is moved by the pushing member 41 (or the pulling member 141) provided to the support member 35, but the present invention is not limited as such. For example, a cam member may be pivotably provided to the lever spindle, a connecting member may be provided for connecting the support member and the cam member, and the rod may be pushed or pulled by the cam member. In this case, the timing whereby hydraulic oil pressure is generated can be regulated.

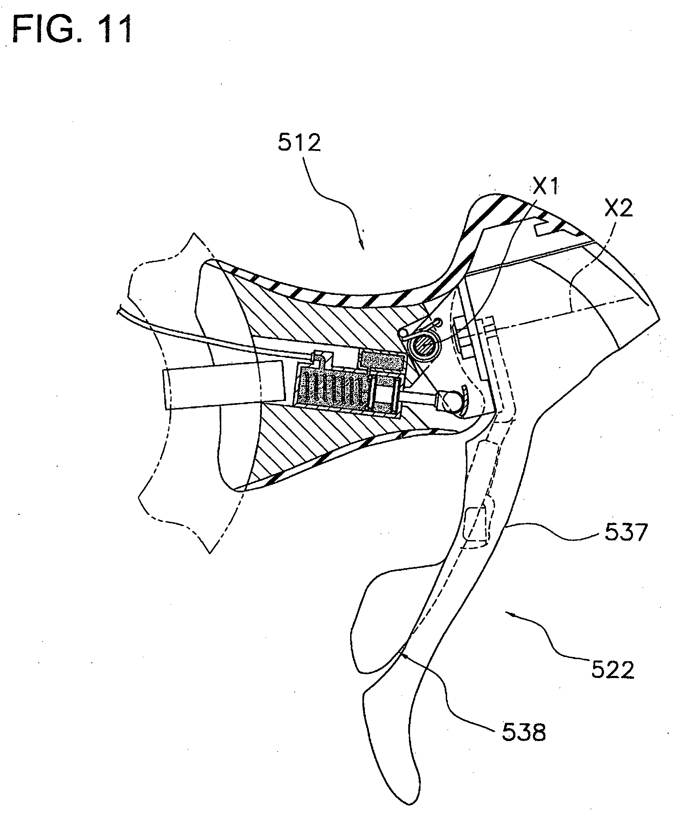

(g) In the first and second embodiments, the second operation lever 38 is configured so as to pivot about the third axis X3, which is different from the first and second axes and substantially parallel with the second axis X2, and to pivot laterally from the stationary position, but the present invention is not limited as such. In a control device 512 as shown in FIG. 11, a second operation lever 538 can be connected to the support member 35 and made to pivot about the same second axis X2 as a first operation lever 537 of a control lever member 522.

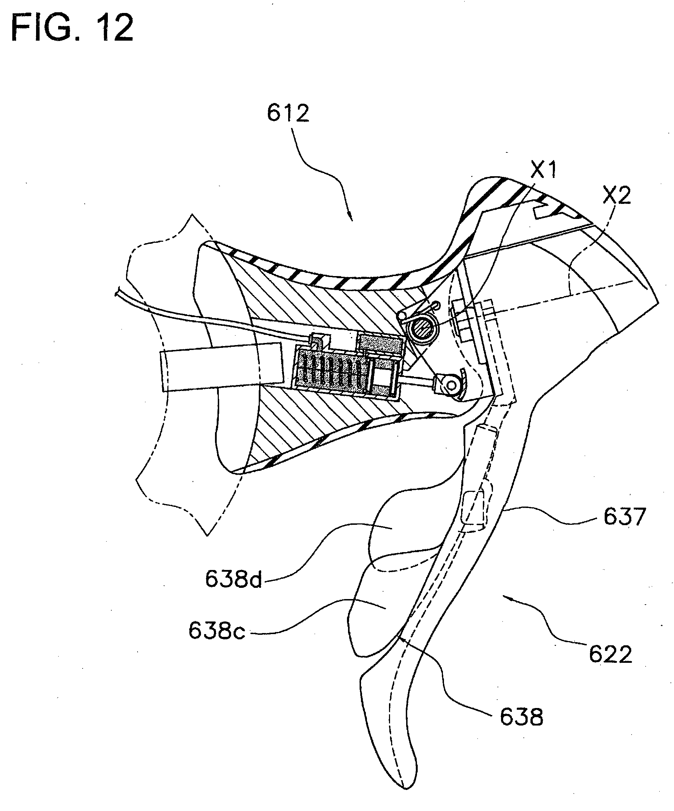

In a control device 612 as shown in FIG. 12, a winding operation lever 638c and a release operation lever 638d of a second operation lever 638 can be made to pivot about the same second axis X2 as a first operation lever 637 of a control lever member 622.

The terms of degree such as "substantially," about," and "approximately" as used herein mean a reasonable amount of deviation of the modified term such that the end result is not significantly changed. These terms can be construed as including a deviation of ± 5% of the modified term if this deviation would not negate the meaning of the word it modifies.

Only selected embodiments have been chosen to described and illustrate the present invention. The foregoing descriptions of the embodiments according to the present invention are provided for illustration only, and not for the purpose of limiting the invention as defined by the appended claims.

### REFERENCES

- 12, 112, 212, 312, 412, 512, 612: Bicycle control device
- 13: Drop handlebar
- 15: Rear derailleur (an example of a shifting device)
- 17: Front wheel
- 18: Braking device
- 19: Front fork
- 20: Housing member
- 20a: Attachment portion
- 20b, 220b: Gripping portion
- 21, 121, 221: Hydraulic oil pressure generator
- 22, 122, 322, 422, 522, 622: Control lever member
- 23: Shifting operation mechanism
- 30, 130, 230: Cylinder
- 31, 131: Piston
- 32, 132: Rod
- 33, 233: Reservoir
- 34: First return spring (example of return spring)
- 35, 135, 335: Support member
- 37, 137, 337, 437, 537, 637: First operation lever
- 38, 438, 538, 638: Second operation lever
- X1: First axis
- X2: Second axis
- X3: Third axis

## Claims

1. A bicycle control device (12) capable of being mounted to a handlebar (13) of a bicycle and capable of controlling a braking device (18) and a shifting device (15), the bicycle control device (12) comprising:
a housing member (20) having an attachment portion (20a) capable of being attached to the handlebar (13), and a gripping portion (20b) capable of being gripped;
a hydraulic oil pressure generator (21) for controlling the braking device (18), the hydraulic oil pressure generator (21) having a cylinder (30) provided inside the gripping portion (20b) of the housing member (20), and a piston (31) capable of moving within the cylinder (30);
a control lever member (22) connected to the housing member (20) so as to be pivotable about a first axis (X1), and having a first operation lever (37) for operating the piston (31); and
a shifting operation mechanism (23) for controlling a control cable (14) capable of connecting with the shifting device (15), the shifting operation mechanism (23) being mounted to the control lever member (22),
**characterized in that**
the gripping portion (20b) has a gripping part main body (24), and a cover member (25) made of an elastic body covering the outside surface of the gripping part main body (24).

2. The bicycle control device (12) according to claim 1, wherein the control lever member (22) has a support member (35) connected to the housing member (20) so as to be pivotable about the first axis (X1).

3. The bicycle control device (12) according to claim 2, wherein the shifting operation mechanism is supported on the support member (35) and includes a cable winding member (50) for winding the control cable (14) about a second axis (X2) different from the first axis (X1).

4. The bicycle control device (12) according to claim 3, wherein the first operation lever (37) of the control lever member (22) is connected to the support member (35) so as to be pivotable about the second axis (X2), and the first operation lever (37) operates the cable winding member (50).

5. The bicycle control device (12) according to any of claims 2 through 4, wherein the control lever member (22) is connected to the support member (35) so as to be pivotable about a second axis (X2) and includes a second operation lever (38) for operating the shifting operation mechanism (23).

6. The bicycle control device (12) according to any of claims 2 through 4, wherein the control lever member (22) is connected to the support member (35) so as to be pivotable about a third axis (X3) different from the first axis (X1) and the second axis (X2), and includes a second operation lever (38) for operating the shifting operation mechanism (23).

7. The bicycle control device (12) according to any of claims 2 through 4, wherein the control lever member (22) is connected to the first operation lever (37) so as to be pivotable about a third axis (X3) different from the first axis(X1) and the second axis (X2), and includes a second operation lever (38) for operating the shifting operation mechanism (23).

8. The bicycle control device (12) according to any of claims 5 through 7, wherein the second operation lever(38) of the control lever member (22) includes a winding operation lever for performing a winding control operation of the control cable (14), and a release operation lever for performing a winding release operation of the control cable (14).

9. The bicycle control device (12) according to any of claims 5 through 7, wherein the first operation lever (37) of the control lever member (22) is a winding operation lever for performing a winding control operation of the control cable (14), and the second operation lever is a release operation lever for performing a winding release control operation of the control cable (14).

10. The bicycle control device (12) according to any of claims 3 through 9, wherein the first axis (X1) and the second axis (X2) are not parallel.

11. The bicycle control device (12) according to claim 10, wherein the first axis (X1) is substantially perpendicular to the traveling direction of the bicycle and the second axis (X2) being substantially parallel to the traveling direction of the bicycle, when the bicycle control device (12) is mounted on a bicycle.

12. A bicycle control device (12) according to any of claims 1 through 11, wherein the hydraulic oil pressure generator (21) generates hydraulic oil pressure by operating the piston (31) in a direction of insertion into the cylinder (30).

13. A bicycle control device (12) according to any of claims 1 through 11, wherein the hydraulic oil pressure generator (21) generates hydraulic oil pressure by operating the piston (31) in a direction of pulling out of the cylinder (30).

14. The bicycle control device (12) according to any of claims 1 through 13, wherein the hydraulic oil pressure generator (21) includes a rod (32) connected to the piston (31) and operated by the first operation lever (37).

15. The bicycle control device (12) according to any of claims 1 through 14, wherein the hydraulic oil pressure generator (21) further includes a reservoir (33) connected to the cylinder (30) and capable of storing oil for generating hydraulic oil pressure.

16. The bicycle control device (12) according to any of claims 1 through 15, wherein the hydraulic oil pressure generator (21) further includes a return spring (36a) for urging the piston (31) in the direction opposite the hydraulic oil pressure generating operation performed by the first operation lever (37), the return spring (36a) being provided inside the cylinder (30).

17. The bicycle control device (12) according to any of claims 1 through 16, wherein the cylinder (30) is provided integrally to the housing member (20).

## Patentansprüche

1. Fahrradsteuervorrichtung (12), die an einer Lenkstange (13) eines Fahrrads montiert werden kann und eine Bremsvorrichtung (18) und eine Schaltvorrichtung (15) steuern kann, wobei die Fahrradsteuervorrichtung (12) aufweist:
ein Gehäuseelement (20), das einen Befestigungsabschnitt (20a), der an der Lenkstange (13) befestigt werden kann, und einen Greifabschnitt (20b) aufweist, der gegriffen werden kann;
eine Hydrauliköldruck-Erzeugungseinrichtung (21) zum Steuern der Bremsvorrichtung (18), wobei die Hydrauliköldruck-Erzeugungseinrichtung (21) einen Zylinder (30), der im Inneren des Greifabschnitts (20b) des Gehäuseelementes (20) vorgesehen ist, und einen Kolben (31) aufweist, der sich innerhalb des Zylinders (30) bewegen kann;
ein Steuerhebelelement (22), das mit dem Gehäuseelement (20) verbunden ist, so dass es um eine erste Achse (X1) geschwenkt werden kann, und einen ersten Bedienhebel (37) zum Betätigen des Kolbens (31) aufweist; und
einen Schaltbetätigungsmechanismus (23) zum Steuern eines Steuerkabels (14), das mit der Schaltvorrichtung (15) verbunden werden kann, wobei der Schaltbetätigungsmechanismus (23) am Steuerhebelelement (22) montiert ist,
**dadurch gekennzeichnet, dass**
der Greifabschnitt (20b) einen Greifteil-Hauptkörper (24) und ein Abdeckungselement (25) aufweist, das aus einem elastischen Körper besteht, der die Außenfläche des Greifteil-Hauptkörpers (24) bedeckt.

2. Fahrradsteuervorrichtung (12) nach Anspruch 1, wobei das Steuerhebelelement (22) ein Trägerelement (35) aufweist, das mit dem Gehäuseelement (22) verbunden ist, so dass es um die erste Achse (X1) geschwenkt werden kann.

3. Fahrradsteuervorrichtung (12) nach Anspruch 2, wobei der Schaltbetätigungsmechanismus auf dem Trägerelement (35) getragen wird und ein Kabelaufwickelelement (50) für ein Aufwickeln das Steuerkabel (14) um eine von der ersten Achse (X1) verschiedene zweite Achse (X2) beinhaltet.

4. Fahrradsteuervorrichtung (12) nach Anspruch 3, wobei der erste Bedienhebel (37) des Steuerhebelelementes (22) mit dem Trägerelement (35) verbunden ist, so dass er um die zweite Achse (X2) schwenkbar ist, und der erste Bedienhebel (37) das Kabelaufwickelelement (50) betätigt.

5. Fahrradsteuervorrichtung (12) nach einem der Ansprüche 2 bis 4, wobei das Steuerhebelelement (22) mit dem Trägerelement (35) verbunden ist, so dass es um eine zweite Achse (X2) schwenkbar ist, und einen zweiten Bedienhebel (38) für ein Betätigen des Schaltbetätigungsmechanismus (23) beinhaltet.

6. Fahrradsteuervorrichtung (12) nach einem der Ansprüche 2 bis 4, wobei das Steuerhebelelement (22) mit dem Trägerelement (35) verbunden ist, so dass es um eine von der ersten Achse (X1) und der zweiten Achse (X2) verschiedene dritte Achse (X3) schwenkbar ist, und einen zweiten Bedienhebel (38) für ein Betätigen des Schaltbetätigungsmechanismus (23) beinhaltet.

7. Fahrradsteuervorrichtung (12) nach einem der Ansprüche 2 bis 4, wobei das Steuerhebelelement (22) mit dem Bedienhebel (37) verbunden ist, so dass es um eine von der ersten Achse (X1) und der zweiten Achse (X2) verschiedene dritte Achse (X3) schwenkbar ist, und einen zweiten Bedienhebel (38) für ein Betätigen des Schaltbetätigungsmechanismus (23) beinhaltet.

8. Fahrradsteuervorrichtung (12) nach einem der Ansprüche 5 bis 7, wobei der zweite Bedienhebel (38) des Steuerhebelelementes (22) einen Aufwickelbedienhebel für ein Durchführen einer Aufwickelsteueroperation des Steuerkabels (14) und einen Freigabe-Bedienhebel für ein Durchführen einer Wickelfreigabebetätigung des Steuerkabels (14) beinhaltet.

9. Fahrradsteuervorrichtung (12) nach einem der Ansprüche 5 bis 7, wobei der erste Bedienhebel (37) des Steuerhebelelementes (22) ein Aufwickelbedienhebel für ein Durchführen einer Aufwickelsteueroperation des Steuerkabels (14) ist, und der zweite Bedienhebel ein Freigabe-Bedienhebel für ein Durchführen einer Wickelfreigabebetätigung des Steuerkabels (14) ist.

10. Fahrradsteuervorrichtung (12) nach einem der Ansprüche 3 bis 9, wobei die erste Achse (X1) und die zweite Achse (X2) nicht parallel sind.

11. Fahrradsteuervorrichtung (12) nach Anspruch 10, wobei die erste Achse (X1) im Wesentlichen parallel zur Fahrtrichtung des Fahrrads ist und die zweite Achse (X2) im Wesentlichen parallel zur Fahrtrichtung des Fahrrades ist, wenn die Fahrradsteuervorrichtung (12) an einem Fahrrad montiert ist.

12. Fahrradsteuervorrichtung (12) nach einem der Ansprüche 1 bis 11, wobei die Hydrauliköldruck-Erzeugungseinrichtung (21) einen Hydrauliköldruck durch Betätigen des Kolbens (31) in Richtung eines Einführens in den Zylinder (30) erzeugt.

13. Fahrradsteuervorrichtung (12) nach einem der Ansprüche 1 bis 11, wobei die Hydrauliköldruck-Erzeugungseinrichtung (21) einen Hydrauliköldruck durch Betätigen des Kolbens (31) in Richtung eines Herausziehens aus dem Zylinder (30) erzeugt.

14. Fahrradsteuervorrichtung (12) nach einem der Ansprüche 1 bis 13, wobei die Hydrauliköldruck-Erzeugungseinrichtung (21) eine Stange (32) beinhaltet, die mit dem Kolben (31) verbunden ist und durch den ersten Bedienhebel (37) betätigt wird.

15. Fahrradsteuervorrichtung (12) nach einem der Ansprüche 1 bis 14, wobei die Hydrauliköldruck-Erzeugungseinrichtung (21) weiter einen Behälter (33) beinhaltet, der mit dem Zylinder (30) verbunden ist und Öl für ein Erzeugen eines Hydrauliköldrucks speichern kann.

16. Fahrradsteuervorrichtung (12) nach einem der Ansprüche 1 bis 15, wobei die Hydrauliköldruck-Erzeugungseinrichtung (21) weiter eine Rückstellfeder (36a) beinhaltet, um den Kolben (31) in Richtung entgegengesetzt zu der mittels des ersten Bedienhebels (37) durchgeführten Hydrauliköldruckerzeugungsoperation zu drängen, wobei die Rückstellfeder (36a) im Inneren des Zylinders (30) vorgesehen ist.

17. Fahrradsteuervorrichtung (12) nach einem der Ansprüche 1 bis 16, wobei der Zylinder integral mit dem Gehäuseelement (20) vorgesehen ist.

## Revendications

1. Dispositif de commande de bicyclette (12) pouvant être monté sur un guidon (13) d'une bicyclette et pouvant commander un dispositif de freinage (18) et un dispositif de changement de vitesse (15), le dispositif de commande de bicyclette (12) comprenant :
un organe de boîtier (20) comportant une portion de fixation (20a) pouvant être fixée au guidon (13), et une portion de préhension (20b) pouvant être saisie ;
un générateur de pression d'huile hydraulique (21) permettant de commander le dispositif de freinage (18), le générateur de pression d'huile hydraulique (21) comportant un cylindre (30) ménagé à l'intérieur de la portion de préhension (20b) de l'organe de boîtier (20), et un piston (31) pouvant se déplacer à l'intérieur du cylindre (30) ;
un organe de levier de commande (22) raccordé à l'organe de boîtier (20) de façon à pouvoir pivoter autour d'un premier axe (X1), et comportant un premier levier d'opération (37) permettant de faire fonctionner le piston (31) ; et
un mécanisme d'opération de changement de vitesse (23) permettant de commander un câble de commande (14) pouvant être raccordé au dispositif de changement de vitesse (15), le mécanisme d'opération de changement de vitesse (23) étant monté sur l'organe de levier de commande (22),
**caractérisé en ce que**
la portion de préhension (20b) comporte un corps principal de partie de préhension (24), et un organe de couvercle (25) constitué d'un corps élastique recouvrant la surface extérieure du corps principal de partie de préhension (24).

2. Dispositif de commande de bicyclette (12) selon la revendication 1, dans lequel l'organe de levier de commande (22) comporte un organe de support (35) raccordé à l'organe de boîtier (20) de façon à pouvoir pivoter autour du premier axe (X1).

3. Dispositif de commande de bicyclette (12) selon la revendication 2, dans lequel le mécanisme d'opération de changement de vitesse est supporté sur l'organe de support (35) et comprend un organe d'enroulement de câble (50) permettant d'enrouler le câble de commande (14) autour d'un deuxième axe (X2) différent du premier axe (X1).

4. Dispositif de commande de bicyclette (12) selon la revendication 3, dans lequel le premier levier d'opération (37) de l'organe de levier de commande (22) est raccordé à l'organe de support (35) de façon à pouvoir pivoter autour du deuxième axe (X2), et le premier levier d'opération (37) fait fonctionner l'organe d'enroulement de câble (50).

5. Dispositif de commande de bicyclette (12) selon l'une quelconque des revendications 2 à 4, dans lequel l'organe de levier de commande (22) est raccordé à l'organe de support (35) de façon à pouvoir pivoter autour d'un deuxième axe (X2) et comprend un second levier d'opération (38) permettant de faire fonctionner le mécanisme d'opération de changement de vitesse (23).

6. Dispositif de commande de bicyclette (12) selon l'une quelconque des revendications 2 à 4, dans lequel l'organe de levier de commande (22) est raccordé à l'organe de support (35) de façon à pouvoir pivoter autour d'un troisième axe (X3) différent du premier axe (X1) et du deuxième axe (X2), et comprend un second levier d'opération (38) permettant de faire fonctionner le mécanisme d'opération de changement de vitesse (23).

7. Dispositif de commande de bicyclette (12) selon l'une quelconque des revendications 2 à 4, dans lequel l'organe de levier de commande (22) est raccordé au premier levier d'opération (37) de façon à pouvoir pivoter autour d'un troisième axe (X3) différent du premier axe (X1) et du deuxième axe (X2), et comprend un second levier d'opération (38) permettant de faire fonctionner le mécanisme d'opération de changement de vitesse (23).

8. Dispositif de commande de bicyclette (12) selon l'une quelconque des revendications 5 à 7, dans lequel le second levier d'opération (38) de l'organe de levier de commande (22) comprend un levier d'opération d'enroulement permettant de réaliser une opération de commande d'enroulement du câble de commande (14), et un levier d'opération de libération permettant de réaliser une opération de libération d'enroulement du câble de commande (14).

9. Dispositif de commande de bicyclette (12) selon l'une quelconque des revendications 5 à 7, dans lequel le premier levier d'opération (37) de l'organe de levier de commande (22) est un levier d'opération d'enroulement permettant de réaliser une opération de commande d'enroulement du câble de commande (14), et le second levier d'opération est un levier d'opération de libération permettant de réaliser une opération de commande de libération d'enroulement du câble de commande (14).

10. Dispositif de commande de bicyclette (12) selon l'une quelconque des revendications 3 à 9, dans lequel le premier axe (X1) et le deuxième axe (X2) ne sont pas parallèles.

11. Dispositif de commande de bicyclette (12) selon la revendication 10, dans lequel le premier axe (X1) est sensiblement perpendiculaire à la direction de déplacement de la bicyclette et le deuxième axe (X2) est sensiblement parallèle à la direction de déplacement de la bicyclette, lorsque le dispositif de commande de bicyclette (12) est monté sur une bicyclette.

12. Dispositif de commande de bicyclette (12) selon l'une quelconque des revendications 1 à 11, dans lequel le générateur de pression d'huile hydraulique (21) génère une pression d'huile hydraulique en faisant fonctionner le piston (31) dans une direction d'insertion dans le cylindre (30).

13. Dispositif de commande de bicyclette (12) selon l'une quelconque des revendications 1 à 11, dans lequel le générateur de pression d'huile hydraulique (21) génère une pression d'huile hydraulique en faisant fonctionner le piston (31) dans une direction de retrait du cylindre (30).

14. Dispositif de commande de bicyclette (12) selon l'une quelconque des revendications 1 à 13, dans lequel le générateur de pression d'huile hydraulique (21) comprend une tige (32) raccordée au piston (31) et actionnée par le premier levier d'opération (37).

15. Dispositif de commande de bicyclette (12) selon l'une quelconque des revendications 1 à 14, dans lequel le générateur de pression d'huile hydraulique (21) comprend en outre un réservoir (33) raccordé au cylindre (30) et pouvant stocker de l'huile permettant de générer la pression d'huile hydraulique.

16. Dispositif de commande de bicyclette (12) selon l'une quelconque des revendications 1 à 15, dans lequel le générateur de pression d'huile hydraulique (21) comprend en outre un ressort de rappel (36a) permettant de pousser le piston (31) dans la direction opposée à l'opération de génération de pression d'huile hydraulique réalisée par le premier levier d'opération (37), le ressort de rappel (36a) étant ménagé à l'intérieur du cylindre (30).

17. Dispositif de commande de bicyclette (12) selon l'une quelconque des revendications 1 à 16, dans lequel le cylindre (30) est ménagé solidairement de l'organe de boîtier (20).
